# EUROPEAN PATENT SPECIFICATION

(11) **EP 0 695 234 B1**
(45) Date of publication and mention of the grant of the patent: **17.05.2000**
(21) Application number: 94905116.3
(22) Date of filing: 24.01.1994
(51) Int. Cl.: B32B 5/16

(54) **LAMINATE WITH INNER LAYER OF CELLULOSIC FIBRES AND OUTER LAYERS OF CHIPBOARD**
VERBUNDPLATTE MIT INNERER LAGE AUS ZELLULOSEFASERN UND ÄUSSEREN SPANPLATTEN
PANNEAU LAMINE A COUCHE INTERNE DE FIBRES CELLULOSIQUES ET COUCHES EXTERNES EN BOIS AGGLOMERE

(30) Priority: 27.01.1993 FI 930338
(43) Date of publication of application: 07.02.1996
(73) Proprietor: SCHAUMAN WOOD OY, SF-52420 Pellosniemi (FI)
(72) Inventor: OLLILA, Timo, FIN-80160 Joensuu (FI); MÄENPÄÄ, Antti, FIN-52300 Ristiina (FI)
(74) Representative: Bunke, Holger, Dr.rer.nat. Dipl.-Chem.
(86) International application number: FI9400029
(87) International publication number: WO9416883

(56) References cited:
- FI-B- 73 717
- US-A- 4 703 854

## Description

### FIELD OF THE INVENTION

The invention concerns a chipboard, its manufacture and use.

### BACKGROUND OF THE INVENTION

Usually, a chipboard is made in such a way that a thermally hardening urea-formaldehyde solution is mixed with wood chips and the mixture thus obtained is hardened in a hot-press.

In Finnish patent FI-B 73717, a method for manufacturing chipboard is disclosed, wherein crosslinkable polyethene powder is used as a binder. Peroxide or vinyl silane is used as a crosslinking agent. A water-soluble adhesive is added to the wood chips to effect adhesion of the polyethene to the wood chips prior to hot pressing. The resulting board is homogeneous.

### GENERAL DESCRIPTION OF THE INVENTION

A chipboard and a method for its preparation has now been invented as defined in the appended claims, wherein the middle layer contains cellulose fibre-based chaff adhered together by plastic. The chaff may be, for example, paper chaff, wood chips or a mixture of these.

The primary advantage of the invention is that a part of the raw material, particularly of the wood, can be replaced by cheap material and even by material available for nothing. The quantity of necessary actual adhesive is reduced at the same time. According to the invention, entirely formaldehyde-free boards can also be made advantageously. The resulting board has better properties in many respects than the conventional chipboard.

### DETAILED DESCRIPTION OF THE INVENTION

The middle layer of the chipboard now invented is a mixture of chaff and thermoplastic material (hereinafter: "plastic") where the plastic binds the pieces of chaff to one another. The piece size is, for example, 1-60 mm, usually 2-5 mm, preferably 5-10 mm. The proportion of plastic in the mixture is, for example, 5-90 %, usually 10-60 % and preferably 20-40 %. The middle layer preferably consists of paper-based chaff.

In principle, the plastic can be any thermoplastic material which is solid at normal temperatures. The thermoplastic is preferably a suitable polyalkene (for example, polyethylene or polypropylene). For example, the plastic may be process scrap, pulper scrap, recycling waste or granulate.

The paper used may in principle be any suitable paper containing cellulose fibres. Cheap recycled material such as kraftliner is most advantageous.

It is particularly advantageous to use chopped paper-plastic laminate as the middle layer material. Such recovered materials are available cheaply, because they are not very suitable for making recycled paper.

If desired, other suitable fibrous materials may also be used together with the paper-based chaff, for example, loose cellulose fibres or wood. Additives may also be used, if required, to obtain special characteristics or to level out variations in the quality of the raw material. If desired, the chaff may even consist entirely of chopped wood.

The outer board layers are made in a conventional manner of wood chips and a suitable binder. The preferred binder is a phenolic or MDI adhesive, but urea- and melamine glues, for example, can also be used.

The outer layer thickness is, for example, 0.5-5 mm, usually 1-2 mm. The middle layer thickness depends on the desired board thickness, which may be, for example, 10-20 mm.

The wood chips may be of a size conventionally used in the manufacture of chipboards (that is, not bigger than 100 mm) or they may be smaller, even down to dust size, such as those used in making so-called fibreboards.

The board can be made in a press in such a way that a layer consisting of a mixture of wood chips and a binder is spread out to a desired thickness on the press base and on top of it a mixture of paper and plastic is spread out to a desired thickness and with a preferable moisture content of less than 8 %, preferably in a range of 1-3 %, and again on top a layer of wood chips and binder mixture. Pressing is then performed at an increased temperature. The temperature depends on which plastics and glues are used and it can be, for example, in a range of 110-220 °C, preferably 180-200 °C. The pressing time depends on the board thickness. The essential thing is for the middle layer temperature to rise to a sufficiently high level. The pressure used can be, for example, 1.47 - 4.90 MPa (15-50 kp/cm²), usually about 2.94 MPa (30 kp/cm²) After heating, the board is cooled. Cooling, too, is preferably performed under a pressure to achieve the exact desired board thickness and for the structure not to break. Cooling under a pressure must hereby be clearly under the melting point of the plastic and preferably also below 100 °C, so that the inner water vapour pressure will not cause any breaking. Cooling may be performed in the same press as the heating or in a separate cooling press. The board can also be made as a pressed profile by carrying out the cooling in a mould.

The board in accordance with the invention can be worked and surface-coated just like any conventional chipboard. Its strength values are at least as good as those of a conventional chipboard. Small hydroexpansivity is a clear advantage compared with a conventional chipboard.

A board in accordance with the invention can be used for similar purposes as any conventional chipboard. It is suitable in particular for use as a surface coating or face board in structures, because a tight seam can be used due to its small hydroexpansivity. A tight seam facilitates surface treatment and improves the sound insulation. The density, which is better than in a conventional chipboard, also makes for better sound insulation. The board is also suitable for use as raw material in the furniture and building joinery industries.

### Example

A paper-plastic laminate used for wrapping paper rolls and containing two kraft paper layers with a polyethylene film in between was chopped to a piece size of 5-10 mm and the chaff was dried to a final moisture content of 2-4 per cent.

A mixture was made of wood chips and glue. A low-alkaline phenolic adhesive was used as glue.

A mixture of wood chips and glue was scattered into a board press to form a blank and on top of it laminate chaff and finally a topmost layer of wood chips and glue mixture. Pressing and cooling were performed. The thickness of the wood chip layers was approximately 1 mm.

The following table shows the characteristics of a board made in two ways by way of example, compared with those of a conventional chipboard.

| | Board 1 | Board 2 | Conv. board |
|---|---|---|---|
| Thickness, mm | 12 | 15 | 15 |
| Density, kg/m³ | 1004 | 1069 | 700 |
| Bending strength, N/mm² | 16.8 | 18.6 | 15 |
| Transverse tensile strength, N/mm² | 0.64 | 0.66 | 0.4 |
| Thickness swelling (2 h soaking), per cent | 3.4 | 2.5 | 8 |
| Length swelling, per cent | 0.05 | - | 0.3 |

## Claims

1. Chipboard, **characterised** in having a middle layer containing cellulose fibre based chaff pieces and a thermoplastic binding together said chaff pieces, and outer wood chip layers glued onto either side of said middle layer.

2. Chipboard in accordance with claim 1, wherein the middle layer comprises kraft paper.

3. Chipboard in accordance with claims 1 or 2, wherein the piece size of paper and thermoplastic is 1-60 mm.

4. Chipboard in accordance with any one of claims 1-3, wherein the middle layer contains 5-60 per cent thermoplastic based on the weight of the layer.

5. A method of making a chipboard, **characterized** in that a middle layer is made of a mixture containing paper and a thermoplastic, in which layer the paper pieces are bound together by said thermoplastic, and a layer of wood chips and glue is adhered to either side of the middle layer.

6. A method in accordance with claim 5, wherein the middle layer is made of paper-plastic laminate chaff.

7. A method in accordance with claim 5 or 6, wherein the chipboard is made in a board press by spreading a layer containing wood chips and glue on the press base; spreading on top of said layer a layer containing paper and thermoplastic; spreading on top of the latter layer a layer containing wood chips and glue; pressing the layers together while heating; keeping the layers compressed for a time sufficient to raise the middle layer temperature to form a board; and cooling.

8. A method in accordance with any one of claims 6-7 wherein the moisture content of the layer containing paper and thermoplastic is less than 8 per cent of the weight of the layer.

## Patentansprüche

1. Spanplatte, gekennzeichnet durch eine Mittelschicht, die Häckselstückchen auf Basis von Zellulosefasern und einen Thermoplasten enthält, der die Häckselstückchen aneinander bindet, sowie durch äußere Holzspanschichten, die mit beiden Seiten der Mittelschicht verleimt sind.

2. Spanplatte nach Anspruch 1, bei der die Mittelschicht Kraftpapier umfaßt.

3. Spanplatte nach Anspruch 1 oder 2, bei der die Teilchengröße des Papiers und des Thermoplasten 1-60 mm beträgt.

4. Spanplatte nach einem der Ansprüche 1 bis 3, bei der die Mittelschicht 5-60 % Thermoplast, bezogen auf das Gewicht der Schicht, enthält.

5. Verfahren zur Herstellung einer Spanplatte, dadurch gekennzeichnet, daß eine Mittelschicht aus einem Papier und einen Thermoplasten enthaltenden Gemisch hergestellt wird, wobei die Papierstückchen durch den Thermoplasten in dieser Schicht aneinander gebunden werden, und daß eine Schicht aus Holzspänen und Leim auf jede Seite der Mittelschicht geklebt wird.

6. Verfahren nach Anspruch 5, bei dem die Mittelschicht aus Häcksel eines Papier-Kunststoff-Laminats hergestellt wird.

7. Verfahren nach Anspruch 5 oder 6, bei dem die Spanplatte in einer Plattenpresse hergestellt wird, indem man eine Holzspäne und Leim enthaltende Schicht auf das Unterteil der Presse streut, über diese Schicht eine Papier und Thermoplast enthaltende Schicht streut, über die letztgenannte Schicht eine Holzspäne und Leim enthaltende Schicht streut, die Schichten unter Zufuhr von Wärme miteinander verpreßt, die Schichten ausreichend lange zusammengepreßt hält, um die Temperatur der Mittelschicht unter Bildung einer Platte zu erhöhen, und schließlich kühlt.

8. Verfahren nach einem der Ansprüche 6 bis 7, bei dem der Feuchtigkeitsgehalt der Papier und Thermoplast enthaltenden Schicht weniger als 8 %, bezogen auf das Gewicht der Schicht, beträgt.

## Revendications

1. Panneau en bois aggloméré caractérisé en ce qu'il présente une couche centrale contenant des menus morceaux à base de fibres de cellulose et un thermoplastique liant entre eux lesdits menus morceaux et des couches externes en copeaux de bois collées sur chaque côté de ladite couche centrale.

2. Panneau en bois aggloméré selon la revendication 1, dans laquelle la couche centrale comprend du papier kraft.

3. Panneau en bois aggloméré selon l'une des revendications 1 ou 2, dans laquelle la taille de particules de papier et de thermoplastique est de 1-60 mm.

4. Panneau en bois aggloméré selon l'une quelconque des revendications 1 à 3, dans laquelle la couche centrale contient 5-60 % de thermoplastique, rapportés au poids de la couche.

5. Procédé pour la fabrication d'un panneau en bois aggloméré, caractérisé en ce qu'une couche centrale est faite d'un mélange contenant du papier et un thermoplastique, dans ladite couche les particules de papier étant liées entres elles par ledit thermoplastique, et en ce qu'une couche de copeaux de bois et de colle est collée sur chaque côté de la couche centrale.

6. Procédé selon la revendication 5, dans lequel la couche centrale est faite de menus morceaux de laminé en papier-plastique.

7. Procédé selon l'une des revendications 5 ou 6, dans lequel le panneau en bois aggloméré est fabriqué dans une presse à plateau en répandant une couche contenant copeaux de bois et colle sur la base de la presse; en répandant sur ladite couche une couche contenant papier et thermoplastique; en répandant sur cette dernière couche une couche contenant copeaux de bois et colle; en pressant ensemble les couches tout en chauffant; en maintenant les couches compressées pendant une durée suffisante pour augmenter la température de la couche centrale lors de la formation d'un panneau; et en refroidissant.

8. Procédé selon l'une quelconque des revendications 6 à 7, dans lequel l'humidité de la couche contenant papier et thermoplastique est inférieure à 8% du poids de la couche.
